# EUROPEAN PATENT APPLICATION

(11) **EP 3 715 489 A1**
(43) Date of publication of application: **30.09.2020**
(21) Application number: 20159808.3
(22) Date of filing: 27.02.2020
(51) Int. Cl.: C22C 21/02, B60B 3/06, C22C 21/04, C22F 1/043

(54) **ALUMINUM ALLOY FOR VEHICLES AND VEHICLE PART**

(30) Priority: 25.03.2019 JP 2019056181
(71) Applicant: HONDA MOTOR CO., LTD, Minato-ku Tokyo 107-8556 (JP)
(72) Inventor: SUZUKI, Noritaka, Wako-shi, Saitama 351-0193 (JP); KOYA, Eitaro, Wako-shi, Saitama 351-0193 (JP)
(74) Representative: Weickmann & Weickmann PartmbB

(57) **Abstract**

The present invention provides an aluminum alloy for vehicles, where the aluminum alloy can improve toughness and offset yield strength while using secondary ingots. An aluminum alloy for vehicles contains 0.6 to 1.2 wt% Mg, 0.4 to 1.0 wt% Fe, 0.2 to 0.5 wt% Mn, Si, and Cu, with size of an intermetallic compound being 30 µm or less. By increasing Mg compared to before, offset yield strength of the aluminum alloy for vehicles is improved and wall thickness of products is reduced, thereby reducing weight. Also, toughness is improved by setting a weight ratio between Fe and Mn to an appropriate value.

## Description

### BACKGROUND OF THE INVENTION

### Field of the Invention

The present invention relates to an aluminum alloy for vehicles as well as to a vehicle part.

### Description of the Related Art

Conventionally, an aluminum alloy for vehicles is known, the aluminum alloy containing 0.2 to 1.0% Fe by weight, 0.01 to 0.7% Mn by weight, Si, and Cu, with the balance being made up of Al and unavoidable impurities (see, for example, International Publication No. WO2014/061329) .

In International Publication No. WO2014/061329, when a secondary ingot is used to reduce costs, because offset yield strength decreases compared to when a virgin ingot is used, it is necessary to take measures such as increasing the thickness of a processed product, which increases weight compared to when a virgin ingot is used. Therefore, in using secondary ingots, there is demand to increase the offset yield strength while holding down increases in weight.

As a technique for increasing the offset yield strength of secondary ingots, it is conceivable to add Mg, but the simple addition of Mg will result in reduced toughness, and thus it is desired to improve both offset yield strength and toughness.

An object of the present invention is to provide an aluminum alloy for vehicles as well as to provide a vehicle part, where the aluminum alloy and vehicle part can improve toughness and offset yield strength while using secondary ingots.

### SUMMARY OF THE INVENTION

An aluminum alloy for vehicles contains 0.6 to 1.2 wt% Mg, 0.4 to 1.0 wt% Fe, 0.2 to 0.5 wt% Mn, Si, and Cu, with size of an intermetallic compound being 30 µm or less.

The aluminum alloy for vehicles may contain 0.8 to 1.0 wt% Mg, 0.4 to 0.8 wt% Fe, and 0.25 to 0.35 wt% Mn, with the size of the intermetallic compound being 15 µm or less.

Also, in the aluminum alloy for vehicles, a ratio by weight (wt%) of the Mn to the Fe may be 30 to 70%.

Also, the aluminum alloy for vehicles may contain 8.0 to 12 wt% Si and 1.0 wt% or less Cu, with the size of the intermetallic compound being 10 µm or less.

Also, the aluminum alloy for vehicles may be formed by die-casting.

A vehicle part is formed of an aluminum alloy for vehicles, the aluminum alloy containing 0.6 to 1.2 wt% Mg, 0.4 to 1.0 wt% Fe, 0.2 to 0.5 wt% Mn, Si, and Cu, with size of an intermetallic compound being 30 µm or less.

The vehicle part may contain 0.8 to 1.0 wt% Mg, 0.4 to 0.8 wt% Fe, and 0.25 to 0.35 wt% Mn, with the size of the intermetallic compound being 15 µm or less.

Also, in the vehicle part, a ratio by weight (wt%) of the Mn to the Fe may be 30 to 70%.

Also, the vehicle part may contain 8.0 to 12 wt% Si and 1.0 wt% or less Cu, with the size of the intermetallic compound being 10 µm or less.

Also, the vehicle part may be formed by die-casting.

Also, the vehicle part may be a motorcycle wheel (10) .

Since the aluminum alloy for vehicles contain 0.6 to 1.2 wt% Mg, 0.4 to 1.0 wt% Fe, 0.2 to 0.5 wt% Mn, Si, and Cu, with size of an intermetallic compound being 30 µm or less, by increasing Mg compared to before, it is possible to improve offset yield strength of the aluminum alloy for vehicles and reduce wall thickness of products and thereby reduce weight. Also, a weight ratio between Fe and Mn can be set to an appropriate value, improving toughness and making it possible to obtain such an aluminum alloy for vehicles that has toughness suitable for vehicle parts.

In the above configuration, since 0.8 to 1.0 wt% Mg, 0.4 to 0.8 wt% Fe, and 0.25 to 0.35 wt% Mn are contained, with the size of the intermetallic compound being 15 µm or less, by increasing Mg compared to before, it is possible to improve offset yield strength of the aluminum alloy for vehicles and reduce wall thickness of products and thereby reduce weight. Also, a weight ratio between Fe and Mn can be set to an appropriate value, improving toughness and making it possible to obtain such an aluminum alloy for vehicles that has toughness suitable for vehicle parts.

Also, in the above configuration, since the ratio by weight (wt%) of the Mn to the Fe is 30 to 70%, the size of the intermetallic compound can be reduced when Fe and Mn are combined, increasing elongation of the aluminum alloy and thereby improving toughness.

Also, in the above configuration, since 8.0 to 12 wt% Si and 1.0 wt% or less Cu are contained, with the size of the intermetallic compound being 10 µm or less, by setting the amount of Si to 8.0 to 12 wt%, it is possible to improve flowability of molten metal and ensure predetermined toughness. Also, if a large amount of Cu is mixed or the size of the intermetallic compound is large, toughness is reduced. Therefore, the toughness can be improved if the amount of Cu and the size of the intermetallic compound are reduced.

Also, in the above configuration, the aluminum alloy for vehicles is formed by die-casting, which makes it possible to obtain such an aluminum alloy for vehicles that has offset yield strength and toughness suitable for vehicle parts.

Also, in the above configuration, since the vehicle part is a motorcycle wheel, it is possible to provide a motorcycle wheel having suitable offset yield strength and toughness.

### BRIEF DESCRIPTION OF THE DRAWINGS

FIG. 1 is a front view showing a motorcycle wheel that uses an aluminum alloy according to an embodiment of the present invention;
FIG. 2 is a sectional view taken along line II-II in FIG. 1;
FIG. 3 is a graph showing a relationship between an amount of Mg and hardness;
FIG. 4 is a graph showing relationships of an Fe amount to a major axis of an intermetallic compound and to elongation;
FIG. 5 is a graph showing relationships of an Mn amount to a major axis of an intermetallic compound and to elongation;
FIG. 6 is a phase diagram of the aluminum alloy according to the embodiment;
FIG. 7 is a graph showing a relationship between an amount of Cu and a major axis of an intermetallic compound; and
FIG. 8 is a graph showing a relationship between a major axis of an intermetallic compound and elongation.

### DETAILED DESCRIPTION OF THE PREFERRED EMBODIMENTS

An embodiment of the present invention will be described below with reference to the drawings.

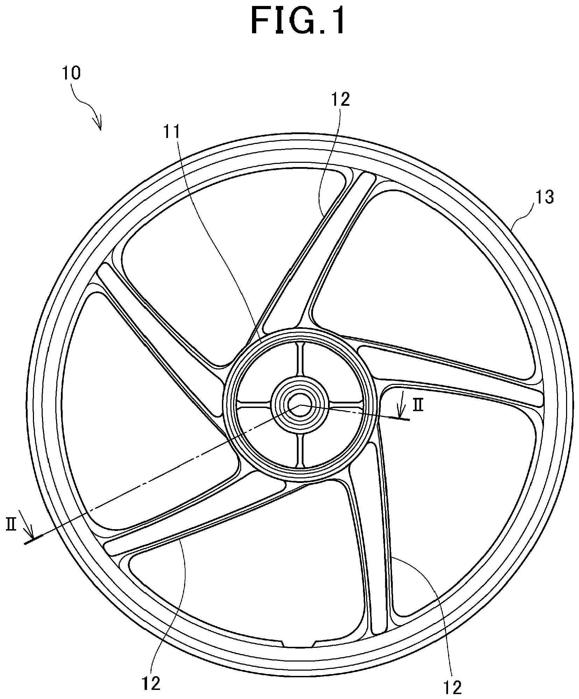

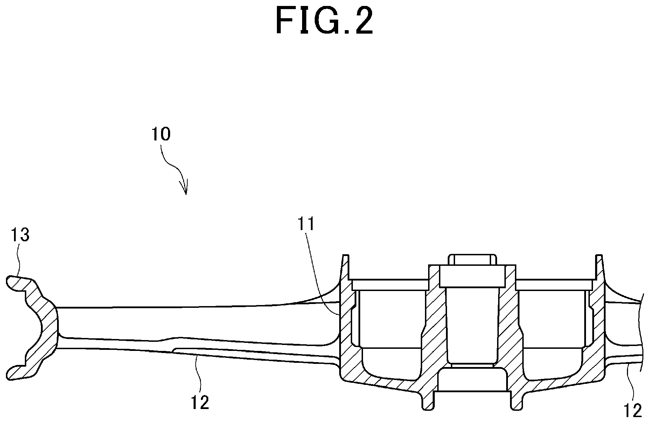

FIG. 1 is a front view showing a motorcycle wheel 10 that uses an aluminum alloy according to an embodiment of the present invention and FIG. 2 is a sectional view taken along line II-II in FIG. 1.

As shown in FIGS. 1 and 2, the motorcycle wheel 10 is made of an aluminum alloy, and includes a hub 11 rotatably supported on an axle (not shown), plural spokes 12 radially extending from the hub 11, and an annular rim 13 connected with tips of the plural spokes 12.

A tire (not shown) is mounted on the rim 13. The motorcycle wheel 10 is die-cast in one piece.

Note that the motorcycle wheel 10 is 17 inches or less in rim diameter and 3.5 inches or less in rim width and that the wheel 10 is not limited to motorcycles and may be used for straddle vehicles including motorcycles.

Offset yield strength and elongation (toughness) are required of aluminum alloys used for vehicle parts such as the motorcycle wheel 10.

It is known that generally toughness decreases with increases in the content of Fe contained as an impurity in the aluminum alloy, and the inventors found that the decrease in toughness is attributable to the influence of intermetallic compounds formed between primary crystals α and Al crystals.

The intermetallic compounds are Al-Fe-Si eutectics and Al-Fe-Mn-Si eutectics contained in eutectics solidifying after the primary crystals and are produced at higher temperatures than the α-Si eutectics. The intermetallic compounds assume various forms depending on the composition of the aluminum alloy, and in particular, on the amounts of Fe and Mn, and occur in needle, plate, or massive form.

The inventors have clarified that the toughness of castings decreases with increases in the sizes of the intermetallic compounds containing Fe. The sizes of the intermetallic compounds as referred to herein mean maximum lengths in any one direction rather than areas or volumes. Thus, after growing into needle or plate form, intermetallic compounds tend to increase in size.

As described above, the shapes and sizes of intermetallic compounds are affected by the composition of the aluminum alloy. When a secondary aluminum ingot is used as feedstock, there is the influence of Fe, Mn, Cu, and other elements incorporated as impurities.

As secondary aluminum ingots, expanded scrap and casting scrap are known, where the expanded scrap is made mostly from aluminum sashes (extruded material) and expanded aluminum out of nonferrous metal scrap and the casting scrap includes cast scrap and shredded materials.

Table 1 shows the composition of examples of secondary aluminum ingots distributed in large quantities.

**[Table 1]**

| Type | | Composition (weight%) | | | | | | |
|---|---|---|---|---|---|---|---|---|
| | | Si | Mg | Mn | Cu | Zn | Fe | Al |
| Expanded scrap | Sash (extruded material) | 1.0 | 0.4 | 0.1 or less | 0.2 or less | 0.4 | 0.6-0.8 | Balance |
| | Expanded material | 1.0 | 0.3-0.5 | 0.3 or less | 0.7-1.0 | 1.5 | 0.9-1.1 | ↑ |
| Casting scrap | Cast scrap | 7.0 | 0.3-0.4 | 0.2 or less | 2.0-2.5 | 1.2-1.5 | 0.9-1.1 | ↑ |
| | Shredded material | 6.0-7.0 | 0.2-0.4 | 0.2 | 1.5-2.0 | 1.2-1.5 | 0.8-1.0 | ↑ |

When any of expanded scrap materials and casting scrap materials such as illustrated by example in Table 1 are selected or mixed, and used as materials of an aluminum alloy for vehicles, the aluminum material contains Si, Fe, Mg, Mn, Cu, Zn, and other elements. While these secondary aluminum ingots can be used as an aluminum material by being mixed with a virgin aluminum ingot, incorporation of impurities is unavoidable also in that case.

Fe reduces toughness in Al-Si alloy castings. When an amount of Fe is large, needle-shaped Al-Si-Fe intermetallic compounds are produced in large quantities, resulting in reduced toughness. On the other hand, Fe has the effect of preventing die castings from seizing to the die.

When added to an Al-Si alloy casting containing Fe, Mn produces massive Al-Si-Fe-Mn intermetallic compounds and has the effect of preventing production of the needle-shaped or plate-shaped Al-Si-Fe intermetallic compounds described above. On the other hand, however, when an amount of Mn is large, the intermetallic compounds increase in size, resulting in reduced toughness of castings.

Cu is considered to be an impurity that reduces the toughness of castings and impairs corrosion resistance.

Mg has the effect of improving tensile strength and offset yield strength, but toughness is reduced with increases in an amount of Mg.

Si has the effect of improving fluidity of molten metal during casting of aluminum alloys.

The inventors have conducted various studies on composition and intermetallic compound size of aluminum alloys for vehicles, the aluminum alloys being made of secondary aluminum ingots, and have found that an aluminum alloy for vehicles containing 0.6 to 1.2 wt% Mg, 0.4 to 1.0 wt% Fe, 0.2 to 0.5 wt% Mn, Si, and Cu, with size of an intermetallic compound being 30 µm or less, provides aluminum die castings having offset yield strength and toughness suitable for vehicle parts.

Consequently, even if an aluminum alloy for vehicles contain impurities such as Fe, Mn, Si, and Cu stemming from secondary aluminum ingots and the like, by increasing Mg compared to before, it is possible to improve offset yield strength of the aluminum alloy for vehicles and reduce wall thickness of products and thereby reduce weight. Also, a weight ratio between Fe and Mn can be set to an appropriate value, improving toughness and making it possible to obtain such an aluminum alloy for vehicles that has toughness suitable for vehicle parts.

Also, if 0.8 to 1.0 wt% Mg, 0.4 to 0.8 wt% Fe, and 0.25 to 0.35 wt% Mn are contained, with the size of the intermetallic compound being 15 µm or less, by increasing Mg compared to before, it is possible to improve offset yield strength of the aluminum alloy for vehicles and reduce wall thickness of products and thereby reduce weight. Also, the weight ratio between Fe and Mn can be set to an appropriate value, improving toughness and making it possible to obtain such an aluminum alloy for vehicles that has toughness suitable for vehicle parts.

This provides an aluminum die casting having an elongation of 4% or more.

Also, since the ratio by weight (wt%) of Mn to Fe is 30 to 70%, the size of the intermetallic compound can be reduced when Fe and Mn are combined, increasing elongation of the aluminum alloy and thereby improving toughness.

Also, since 8.0 to 12 wt% Si and 1.0 wt% or less Cu are contained, with the size of the intermetallic compound being 10 µm or less, by setting the amount of Si to 8.0 to 12 wt%, it is possible to improve flowability of molten metal and ensure predetermined toughness. Also, if a large amount of Cu is mixed or the size of the intermetallic compound is large, toughness is reduced. Therefore, the toughness can be improved if the amount of Cu and the size of the intermetallic compound are reduced.

Also, the aluminum alloy for vehicles is formed by die-casting, which makes it possible to obtain such an aluminum alloy for vehicles that has offset yield strength and toughness suitable for vehicle parts.

Also, since the vehicle part is a motorcycle wheel 10, it is possible to provide a motorcycle wheel 10 having suitable offset yield strength and toughness.

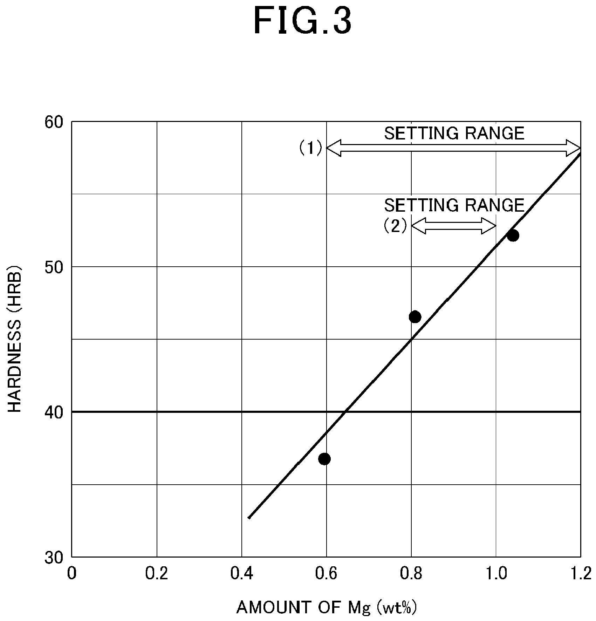

Characteristics of the aluminum alloy for vehicles will be described in detail below with reference to FIGS. 3 to 8. Note that the present invention should not be interpreted restrictively based on the following description.

FIG. 3 is a graph showing a relationship between an amount of Mg and hardness, where the ordinate of the graph represents hardness (based on HRB) and the abscissa represents the amount of Mg (in wt%).

The hardness increases gradually with increases in the amount of Mg. That is, the offset yield strength of the aluminum alloy for vehicles increases. The offset yield strength is 0.2% offset yield strength.

When the amount of Mg is too large, the toughness of the aluminum alloy for vehicles decreases, and thus according to the present embodiment, the amount of Mg is set to (1) 0.6 to 1.2 wt%, and preferably to (2) 0.8 to 1.0 wt%. The amount of Mg is increased greatly compared to the Mg amount of 0.1 to 0.2 wt% according to a conventional casting method.

An allowable range of hardness is 40 or more. When the amount of Mg is in the above-mentioned range of (2) 0.8 to 1.0 wt%, the hardness is within the allowable range.

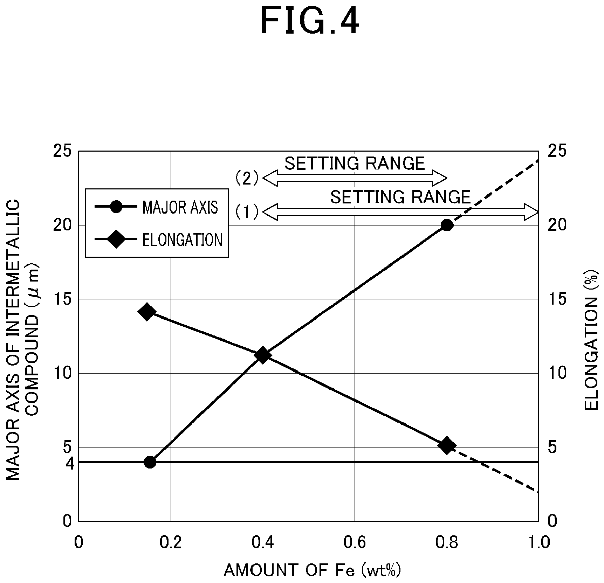

FIG. 4 is a graph showing relationships of an Fe amount to a major axis of an intermetallic compound and to elongation.

The ordinate on the left side of the graph represents the major axis (in µm) of the intermetallic compound, the ordinate on the right side represents elongation (in %), and the abscissa represents the amount of Fe (in wt%).

The major axis of the intermetallic compound increases with increases in the amount of Fe. On the other hand, the elongation decreases with increases in the amount of Fe. In this way, when the amount of Fe increases, the intermetallic compound grows into needle or plate form, resulting in decreased toughness. Consequently, according to the present embodiment, the amount of Fe is set to (1) 0.4 to 1.0 wt% and preferably to (2) 0.4 to 0.8 wt%.

Note that the major axis of the intermetallic compound and the elongation at the Fe amount of 1.0 wt% are extrapolated from the values at the Fe amounts of 0.4 wt% and 0.8 wt% as indicated by broken lines.

An allowable range of elongation is 4% and when the amount of Fe is in the above-mentioned range of (2) 0.4 to 0.8 wt%, the elongation is within the allowable range.

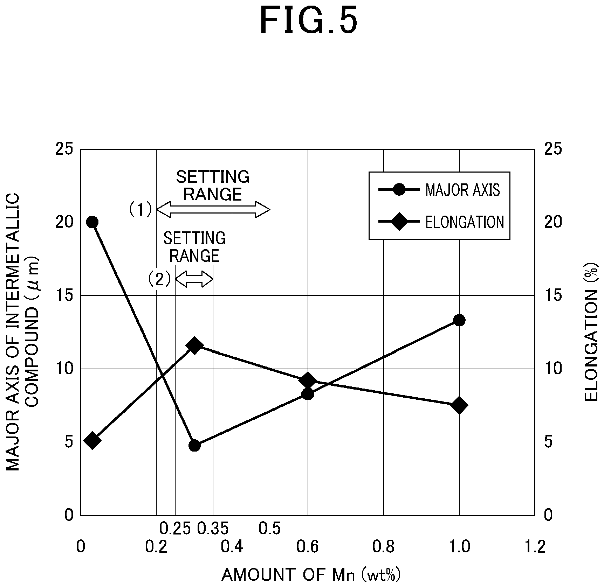

FIG. 5 is a graph showing relationships of an Mn amount to a major axis of an intermetallic compound and to elongation. The ordinate on the left side of the graph represents the major axis (in µm) of the intermetallic compound, the ordinate on the right side represents elongation (in %), and the abscissa represents the amount of Mn (in wt%).

The major axis of the intermetallic compound decreases gradually as the amount of Mn increases from a value close to 0 (zero), but then increases gradually when the amount of Mn exceeds approximately 0.3 wt%.

On the other hand, the elongation increases as the amount of Mn increases from a value close to 0 (zero), but then decreases gradually when the amount of Mn exceeds approximately 0.3 wt%.

According to the present embodiment, the amount of Mn is set to (1) 0.2 to 0.5 wt% and preferably to (2) 0.25 to 0.35 wt% by sandwiching the Mn amount of approximately 0.3 wt% which maximizes the elongation such that the major axis of the intermetallic compound will be minimized.

The allowable range of elongation is 4% and when the amount of Mn is in the above-mentioned range of (1) 0.2 to 0.5 wt% or the amount of Fe is in the above-mentioned range of (2) 0.4 to 1.0 wt%, the elongation is within the allowable range.

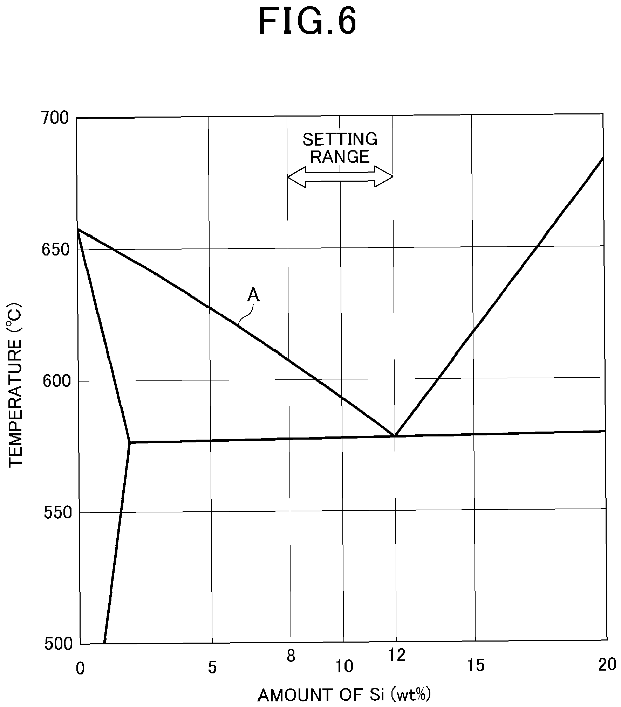

FIG. 6 is a phase diagram of the aluminum alloy according to the embodiment.

The ordinate of the graph represents temperature (in degrees C) and the abscissa represents the amount of Si (in wt%).

On a liquidus line A, the temperature falls as the amount of Si increases from 0 (zero) to approximately 12 wt%. That is, the melting point of the aluminum alloy falls gradually. To ensure fluidity of molten metal during casting, the amount of Si is set to a range of 8.0 to 12.0 in which the melting point falls.

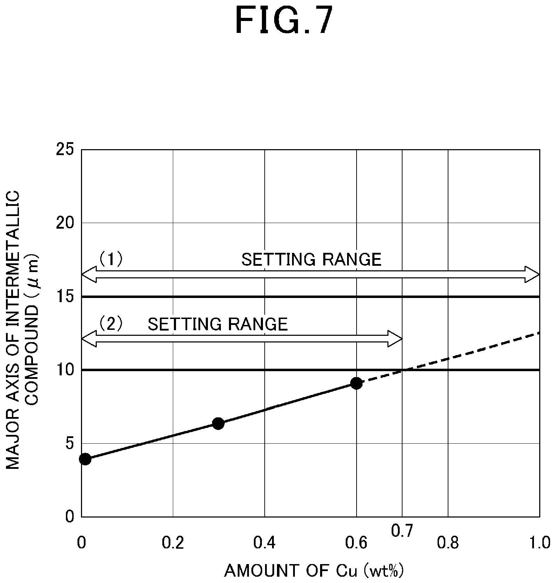

FIG. 7 is a graph showing a relationship between the amount of Cu and the major axis of an intermetallic compound. The ordinate of the graph represents the major axis (in µm) of the intermetallic compound and the abscissa represents the amount of Cu (in wt%).

The major axis of the intermetallic compound increases with increases in the amount of Cu. Thus, an excessive amount of Cu results in reduced toughness.

Note that the major axis of the intermetallic compound corresponding to the Cu amount of 0.6 to 1.0 wt% is extrapolated from the values corresponding to the Cu amount of up to 0.6 wt% as indicated by broken lines.

According to the present embodiment, (1) the amount of Cu is set to 1.0 wt% or less such that the major axis of the intermetallic compound will be 15 µm or less (within the allowable range), and (2) preferably the amount of Cu is set to 0.7 wt% or less such that the major axis of the intermetallic compound will be 10 µm or less (within the allowable range).

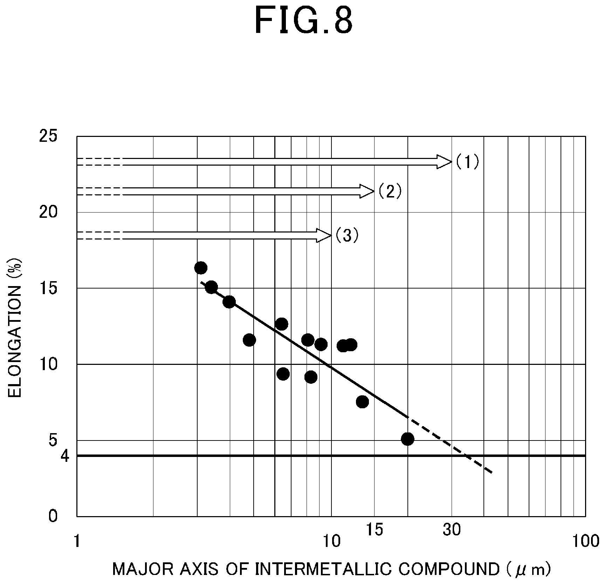

FIG. 8 is a graph showing a relationship between elongation and the major axis of an intermetallic compound.

The ordinate of the graph represents elongation (in %) and the abscissa represents the major axis (in µm) of the intermetallic compound. In the graph of FIG. 8, the abscissa is graduated logarithmically.

The elongation decreases gradually with increases in the major axis of the intermetallic compound. To ensure an elongation of at least 4% (within the allowable range), the major axis of the intermetallic compound is set to (1) 30 µm or less. Also, the major axis of the intermetallic compound is (2) preferably 15 µm or less, and (3) more preferably 10 µm or less.

As shown in FIGS. 3 to 5 and 8, (A) 0.6 to 1.2 wt% Mg, 0.4 to 1.0 wt% Fe, 0.2 to 0.5 wt% Mn, Si, and Cu are contained, with the size of an intermetallic compound being 30 µm or less.

Also, (B) 0.8 to 1.0 wt% Mg, 0.4 to 0.8 wt% Fe, and 0.25 to 0.35 wt% Mn are contained, with the size of the intermetallic compound being 15 µm or less.

With the above configurations (A) and (B), by increasing Mg compared to before, it is possible to improve offset yield strength of the aluminum alloy for vehicles and reduce wall thickness of products and thereby reduce weight. Also, the weight ratio between Fe and Mn can be set to an appropriate value, improving toughness and making it possible to obtain such an aluminum alloy for vehicles that has toughness suitable for vehicle parts.

Also, as shown in FIGS. 4 and 5, the ratio by weight (wt%) of Mn to Fe is 30 to 70%.

With this configuration, the size of the intermetallic compound can be reduced when Fe and Mn are combined, increasing elongation of the aluminum alloy and thereby improving toughness.

Also, as shown in FIGS. 6 and 7, 8.0 to 12 wt% Si and 1.0 wt% or less Cu are contained, with the size of the intermetallic compound being 10 µm or less.

With this configuration, by setting the amount of Si to 8.0 to 12 wt%, it is possible to improve flowability of molten metal and ensure predetermined toughness. Also, if a large amount of Cu is mixed or the size of the intermetallic compound is large, toughness is reduced. Therefore, the toughness can be improved if the amount of Cu and the size of the intermetallic compound are reduced.

Also, the aluminum alloy for vehicles is formed by die-casting.

This configuration makes it possible to obtain by die-casting such an aluminum alloy for vehicles that has offset yield strength and toughness suitable for vehicle parts.

Also, as shown in FIGS. 1 and 2, the vehicle part is a motorcycle wheel 10. This configuration makes it possible to provide a motorcycle wheel 10 having suitable offset yield strength and toughness.

The embodiment described above merely shows one form of the present invention, and desired alterations and applications are possible without departing from the spirit of the invention.

The present invention provides an aluminum alloy for vehicles, where the aluminum alloy can improve toughness and offset yield strength while using secondary ingots. An aluminum alloy for vehicles contains 0.6 to 1.2 wt% Mg, 0.4 to 1.0 wt% Fe, 0.2 to 0.5 wt% Mn, Si, and Cu, with size of an intermetallic compound being 30 □m or less. By increasing Mg compared to before, offset yield strength of the aluminum alloy for vehicles is improved and wall thickness of products is reduced, thereby reducing weight. Also, toughness is improved by setting a weight ratio between Fe and Mn to an appropriate value.

### Reference Signs List

- 10: Motorcycle wheel (vehicle part)

## Claims

1. An aluminum alloy for vehicles **characterized by** containing 0.6 to 1.2 wt% Mg, 0.4 to 1.0 wt% Fe, 0.2 to 0.5 wt% Mn, Si, and Cu, with size of an intermetallic compound being 30 µm or less.

2. The aluminum alloy for vehicles according to claim 1, wherein the aluminum alloy contains 0.8 to 1.0 wt% Mg, 0.4 to 0.8 wt% Fe, and 0.25 to 0.35 wt% Mn, with the size of the intermetallic compound being 15 µm or less.

3. The aluminum alloy for vehicles according to claim 1 or 2, wherein a ratio by weight (wt%) of the Mn to the Fe is 30 to 70%.

4. The aluminum alloy for vehicles according to claim 3, wherein the aluminum alloy contains 8.0 to 12 wt% Si and 1.0 wt% or less Cu, with the size of the intermetallic compound being 10 µm or less.

5. The aluminum alloy for vehicles according to any one of claims 1 to 4, wherein the aluminum alloy is formed by die-casting.

6. A vehicle part **characterized by** comprising the aluminum alloy for vehicles according to claim 1.

7. The vehicle part according to claim 6, wherein the vehicle part contains 0.8 to 1.0 wt% Mg, 0.4 to 0.8 wt% Fe, and 0.25 to 0.35 wt% Mn, with the size of the intermetallic compound being 15 µm or less.

8. The vehicle part according to claim 6 or 7, wherein a ratio by weight (wt%) of the Mn to the Fe is 30 to 70%.

9. The vehicle part according to claim 8, wherein the vehicle part contains 8.0 to 12 wt% Si and 1.0 wt% or less Cu, with the size of the intermetallic compound being 10 µm or less.

10. The vehicle part according to any one of claims 6 to 9, wherein the vehicle part is formed by die-casting.

11. The vehicle part according to any one of claims 6 to 10, wherein the vehicle part is a motorcycle wheel (10).
